# EUROPÄISCHE PATENTANMELDUNG

(11) **EP 0 979 905 A1**
(43) Veröffentlichungstag der Anmeldung: **16.02.2000**
(21) Anmeldenummer: 99113814.0
(22) Anmeldetag: 15.07.1999
(51) Int. Cl.: E04B 1/58

(54) **Vorrichtung zum Verbinden von zwei Profilschienen**

(30) Priorität: 11.08.1998 DE 19836226
(71) Anmelder: Friatec Aktiengesellschaft, 68229 Mannheim (DE)
(72) Erfinder: Warkus, Clemens, 68723 Oftersheim (DE); Krzempek, Gregor, 68723 Oftersheim (DE); Schweigert, Adolf, 88682 Salem (DE)
(74) Vertreter: Schmitt, Meinrad, Dipl.-Ing.

(57) **Zusammenfassung**

Die Erfindung bezieht sich auf eine Vorrichtung zum Verbinden von zwei Profilschienen (1,2), welche insbesondere in ihren Eckbereichen jeweils wenigstens eine hinterschnittene Längsnut (4) und/oder eine Längskante (35) aufweisen, enthaltend eine Verbindungsschiene (12,13) und zwei Verbindungsprofile (6,7), welche einerseits mit der Verbindungsschiene (12,13) und andererseits mit jeweils einer der genannten Profilschienen (1,2) verbindbar sind. Die Vorrichtung soll dahingehend weitergebildet werden, daß die Profischienen (1,2) problemlos und gleichwohl funktionssicher miteinander verbunden werden können. Es wird vorgeschlagen, daß die Verbindungsprofile (6,7) Haltekrallen (34,42,36) aufweisen, welche in die wenigstens eine Längsnut (4) der zugeordneten Profilschiene (1,2) eingreifen und/oder an deren Längskante (35) angreifen, daß die Haltekrallen (34,42,36) in der genannten Längsnut (4) und/oder an der genannten Längskante (35) festspannbar und/oder festklemmbar sind und daß die beiden Verbindungsprofile (6,7) mittels Gelenken (14,16) wenigstens einer Verbindungsschiene (12,13) miteinander verbunden und mittels Arretierungsmitteln (18-21) in einer vorgebbaren Position zueinander fixierbar sind.

## Beschreibung

Die Erfindung bezieht sich auf eine Vorrichtung zum Verbinden von zwei Profilschienen, insbesondere eines Vorwand-Montagesystems, gemäß den im Oberbegriff des Patentanspruchs 1 angegebenen Merkmalen.

Aus dem deutschen Gebrauchsmuster DE 297 22 175 U1 ist eine derartige Vorrichtung mit zwei beabstandet angeordneten Profilschienen bekannt. Die Profilschienen weisen einen grundsätzlich rechteckförmigen, bevorzugt quadratischen Querschnitt auf und enthalten im Bereich ihrer vier rechtwinklig zueinander angeordneten Außenflächen jeweils eine hintergriffige Längsnut. Es ist ein Doppelschenkel-Verbinder mit zwei parallelen Schenkeln aus Flachmetall vorgesehen, welche stirnseitig in zwei der genannten Längsnuten der einen Profilschiene einschiebbar sind und dort mittels Schraubverbindungen gegen die Flanken der jeweiligen Längsnut über eine Preßverbindung festsetzbar sind. Die beiden Schenkel des aus Flachmetall bestehenden Verbinders sind über einen 180°-Bogen miteinander verbunden, welcher mittels eines Gewindebolzens und einem Winkelstück mit der anderen Profilschiene über eine Schraubverbindung gekoppelt ist. Aufgrund des genannten Bogens der Verbinders können die beiden Profilschienen in der gewünschten Winkelstellung zueinander miteinander verbunden werden, doch ist im Hinblick auf die Preß- und Schraubverbindungen ein nicht unerheblicher Montageaufwand erforderlich. Eine ungefähre Vorab-Ausrichtung der beiden Profilschienen ist nicht ohne weiteres möglich und der Montageaufwand für eine eventuelle Korrektur der gegenseitigen Ausrichtung der Profilschienen ist zeit- und arbeitsaufwendig. In einem Montagesystem, insbesondere Vorwand-Montagesystem, im Sanitär-bereich zur Befestigung von Sanitärelementen, wie WC-Schüsseln, Urinale, Spülkästen und dergleichen, gestaltet sich mit der vorbekannten Vorrichtung die Montage recht aufwendig.

Ferner ist aus dem deutschen Patent DE 196 17 653 C2 eine Vorrichtung bekannt, deren Profilschienen einen im Prinzip rechteckförmigen, insbesondere quadratischen, Querschnitt aufweisen und in ihren Eckbereichen hinterschnittene Längsnuten enthalten, in welche Verbindungselemente durch ein Fügeverfahren des federnden Einspreizens oder des Fügens durch Preßpassung einfügbar sind. Mittels der Verbindungselemente ist die Verbindung mit dem Ende einer weiteren Profilschiene durchführbar. So kann zur Verbindung der beiden Profilschienen beispielsweise eine zu diesen orthogonal ausgerichtete weitere Profilschiene vorgesehen werden, die jeweils mit den Enden der beiden Profilschienen mittels eines Verbindungselements verbunden werden kann. Die weitere Profilschiene ist auf eine Länge entsprechend dem gewünschten Abstand zurechtzuschneiden und eine Änderung des Abstands ist nicht ohne weiteres möglich. Eine von einer parallelen Ausrichtung der beiden Profilschienen abweichende Anordnung ist mit der vorbekannten Vorrichtung nicht ohne weiteres durchführbar. Die Montage erfordert einen nicht unerheblichen Arbeits- und Zeitaufwand.

Hiervon ausgehend liegt der Erfindung die Aufgabe zugrunde, die Vorrichtung der genannten Art dahingehend weiterzubilden, daß die Profilschienen problemlos und gleichwohl funktionssicher miteinander verbunden werden können. Der Montageaufwand soll auf ein Minimum reduziert werden und die Anpassung an unterschiedliche bauliche Gegebenheiten und eine beliebige Positionierung der Profilschienen zueinander, sei es parallel oder in vorgebbaren Winkelbereichen, soll bei einfacher Handhabung durchführbar sein.

Die Lösung dieser Aufgabe erfolgt gemäß den im Patentanspruch 1 angegebenen Merkmalen.

Die erfindungsgemäße Vorrichtung zeichnet sich durch einen funktionsgerechten Aufbau aus und ermöglicht bei einfacher Handhabung die Ausrichtung und gegenseitige Fixierung der beiden Profilschienen. Es sind insbesondere zwei seitliche Verbindungsprofile vorgesehen, welche mit Krallen oder dergleichen in die wenigstens eine, insbesondere hinterschnittene, Längsnut der jeweiligen Profilschiene eingreifen und/oder an einer Längskante der jeweiligen Profilschiene angreifen und im wesentlichen parallel zur zugeordneten Profilschiene angeordnet sind. Bevorzugt sind zwei Verbindungsprofile vorgesehen, welche jeweils mit der hinterschnittenen Längsnut der zugeordneten Profilschiene verbindbar sind und welche jeweils ein Langloch oder einen Schlitz für Gelenke oder Arretierungsmittel des Verbindungsprofils enthalten. Die Festlegung der Verbindungsprofile an der jeweils zugeordneten Profilschiene bzw. in deren Längsnut erfolgt in zweckmäßiger Weise mittels einer Haltevorrichtung, welche wenigstens eine Haltekralle enthält und in der Längsnut oder an der Längskante der Profilschiene vorzugsweise mittels eines Hebels festklemmbar ist. Die Verbindungsprofile enthalten jeweils eine Seitenwand, welche parallel zur jeweiligen Profilschiene und bevorzugt an dieser anliegend angeordnet werden, und ferner einen Querträger, welcher in bevorzugter Weise das Langloch oder den Schlitz für die Gelenke und/oder Arretierungsmittel enthält. Die Querträger der beiden Verbindungsprofile sind mittels der wenigstens einen Verbindungsschiene gelenkig miteinander verbunden, wobei Arretierungsmittel, insbesondere in Form von Schrauben vorgesehen sind, um eine definierte Ausrichtung der beiden Verbindungsprofile und somit der Profilschienen miteinander zu ermöglichen. In zweckmäßiger Weise sind zwei Verbindungsschienen vorgesehen, welche insbesondere kreuzartig bzw. ähnlich einer Schere einander zugeordnet sind.

In zweckmäßiger Weise ist die oder sind die Verbindungsschienen an dem Querträger der Verbindungsprofile einerseits mittels eines festen Gelenks gekoppelt und andererseits mit einem längs verschiebbaren Gelenk, wobei der Querträger zur Aufnahme des verschiebbaren Gelenks sowie der Arretierungsmittel den genannten Schlitz aufweist. In einer weiteren Ausgestaltung sind die Verbindungsschienen, in einem Kreuzungsbereich mittels eines Kopplungselements miteinander derart verbunden, daß bei paralleler Ausrichtung der beiden Verbindungsprofile deren Abstand zueinander vorgegeben und eingestellt werden kann. Bedarfsweise können diese Kopplungsmittel, insbesondere in Form einer Schraube, entfernt werden, so daß die gegenseitige Winkelstellung der beiden Verbindungsprofile und somit der mit diesen verbindbaren Profilschienen variabel ist.

Weiterbildungen und besondere Ausgestaltungen der Erfindung sind in den Unteransprüchen und der weiteren Beschreibung angegeben.

Die Erfindung wird nachfolgend anhand des in der Zeichnung dargestellten Ausführungsbeispiels näher erläutert, ohne daß insoweit eine Beschränkung erfolgt. Es zeigen:
- Fig. 1: eine Aufsicht auf die Verbindungsvorrichtung,
- Fig. 2: das zweite seitliche Verbindungsprofil in Blickrichtung A gemäß Fig. 1,
- Fig. 3: eine Ansicht der Verbindungsvorrichtung in Blickrichtung B gemäß Fig. 1.

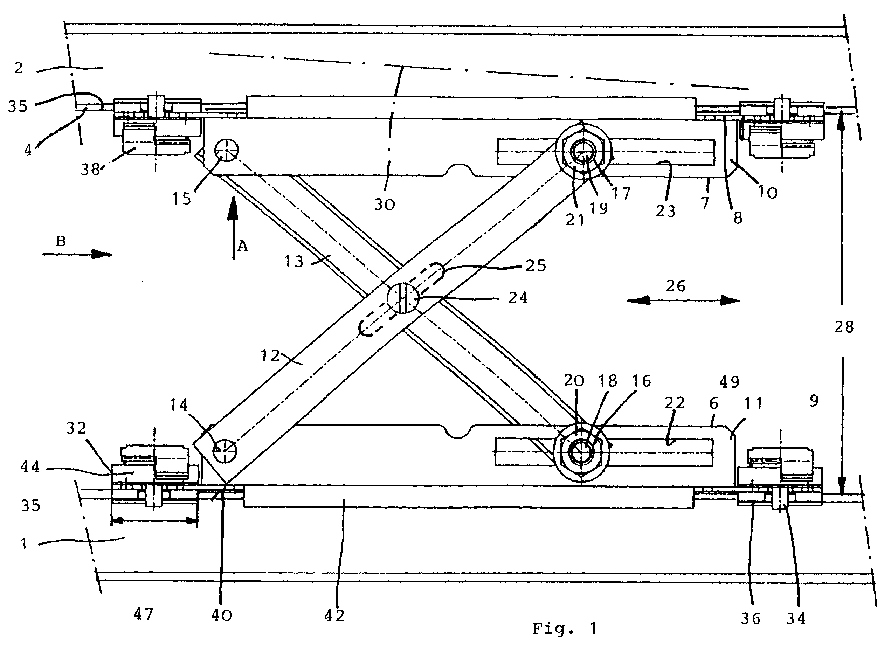

Fig. 1 zeigt eine Ansicht der Vorrichtung zum Verbinden von zwei Profilschienen 1, 2, welche einen rechteckförmigen, zweckmäßig einen quadratischen Querschnitt aufweisen. Die Profilschienen 1, 2 enthalten, vorzugsweise in wenigstens zwei Eckbereichen jeweils eine hinterschnittene Längsnut 4. Hinter der Zeichenebene enthalten die beiden Profilschienen 1, 2 in ihren dort liegenden Eckbereichen jeweils entsprechende weitere hinterschnittene Längsnuten. Parallel zu der Profilschiene 1 ist ein erstes Verbindungsprofil 6 und parallel zur anderen Profilschiene 2 ist ein zweites Verbindungsprofil 7 vorgesehen. Die Verbindungsprofile 6, 7 sind im wesentlichen als Winkelprofile ausgebildet, mit einer Seitenwand bzw. einem zur Zeichenebene orthogonalen Schenkel 8, 9 und einem Querträger 10, 11. Diese Querträger 10, 11 sind auf der den zugeordneten Profilschienen 1, 2 abgewandten Innenseiten der Verbindungsvorrichtung angeordnet. An den beiden Querträgern 10, 11 ist wenigens eine Verbindungsschiene 12, bevorzugt zwei Verbindungsschienen 12, 13, gelenkig angeordnet. So ist die Verbindungsschiene 12 mit dem Querträger 10 einerseits mit einem festen Gelenk 14, insbesondere in Form einer Nietverbindung, gelenkig angekoppelt, während andererseits die Verbindungsschiene 12 mit einem bei Bedarf arretierbaren Gelenk 16 mit dem anderen Querträger 11 gekoppelt. Ist nur die eine Verbindungsschiene 12 vorgesehen, so ist auch das erstgenannte Gelenk 14 bei Bedarf mit geeigneten Arretierungsmitteln arretierbar.

Das arretierbare Gelenk 16 enthält insbesondere eine Schraube 18 und als Arretierungsmittel eine mit der Schraube 18 ein Eingriff stehende Mutter 20, wobei durch Festziehen der Mutter 20 die Arretierung durchführbar ist. Die Schraube 18 durchgreift gemäß Zeichnung von der Rückseite her einen Schlitz 22 des Querträgers 11, und zwar zweckmäßig mit einem Vierkant entsprechend der Schlitzbreite zur Drehsicherung. Ferner durchdringt die Schraube 18 das Ende der Verbindungsschiene 12 und greift mit ihrem Ende in die Mutter 21 ein. Alternativ kann zur Drehsicherung der Schraube 18 die Verbindungsschiene eine quadratische Öffnung für den Vierkant enthalten. In entsprechender Weise ist die andere Verbindungsschiene 13 einerseits mit dem Querträger 11 des zweiten seitlichen Verbindungsprofils 7 sowie dem ersten seitlichen Verbindungsprofil 10 verbunden. Die gemäß Zeichnung "untere" Verbindungsschiene 13 ist als ein nach oben offenes U ausgebildet, während die "obere" Verbindungsschiene als nach unten offenes U ausgebildet ist. Desweiteren sind die Verbindungsschienen 12, bevorzugt in der Mitte ihrer Längserstreckung über ein Kopplungsmittel 24 gekoppelt, welches bevorzugt als eine Schraube ausgebildet ist. Die Verbindung der beiden seitlichen Querträger 10, 11 erfolgt somit nach Art einer Schere über die beiden Verbindungsschienen 12. Da die arretierbaren Gelenke 16, 17 entlang der Schlitze 22, 23 in Richtung des Doppelpfeils 26 verschiebbar sind, ist erfindungsgemäß der Abstand 28 der beiden Verbindungsprofile 6, 7 und folglich der mit diesen gekoppelten Profilschienen 1, 2 variabel. Die Einstellung des Abstandes erfolgt, solange die Arretierungsmittel 18 bis 21 sich im gelösten Zustand befinden. Nach erfolgter Ausrichtung der beiden Profilschienen 1, 2 werden mit den Arretierungsmitteln die Gelenke arretiert, wobei in zweckmäßiger Weise eine Verspannung der Enden der Verbindungsschienen mit dem jeweiligen Querträger 10, 11 erfolgt, wobei eine dauerhafte Einstellung der parallelen Ausrichtung der beiden Profilschienen 1, 2 vorgegeben bleibt.

Die beiden Profilschienen 1, 2 können darüberhinaus auch in einer von der parallelen Ausrichtung abweichenden vorgebbaren Winkellage zueinander fixiert werden. Hierzu werden die Kopplungsmittel 24 der beiden Verbindungsschienen 12, 13 entfernt. Alternativ kann im Rahmen der Erfindung zumindest eine der Verbindungsschienen 12, 13 mit einem Langloch 25 versehen sein, so daß die gelösten Kopplungsmittel 24 beispielsweise in Längsrichtung der Verbindungsschiene 12 verschiebbar sind. Wie ersichtlich, können dann die arretierbaren Gelenke 16, 17 im jeweiligen Schlitz 22, 23 derart verschoben und eingestellt werden, daß die Profilschiene 2 beispielsweise die mittels strichpunktierter Linie 30 angedeutete Relativlage zur ersten Profilschiene 1 einnimmt.

Ferner enthalten die Verbindungsprofile 6, 7 jeweils eine Haltevorrichtung 32 zur Herstellung einer festen Verbindung mit der zugeordneten Profilschiene. In bevorzugter Weise enthält jedes Verbindungsprofil 26, insbesondere im Endbereich, eine derartige Haltevorrichtung 32, und zwar insbesondere im Anschluß an den Querträger 10, 11. Die Haltevorrichtung 32 enthält eine erste Haltekralle 34, welche in die hinterschnittene Längsnut 4 der Profilschiene 1 bzw. 2 eingreift und/oder an einer Längskante 35 angreift bzw. diese teilweise umgreift. Ferner ist eine zweite Haltekralle 36 vorhanden, welche in die hinter der Zeichenebene liegende, zweite hinterschnittene Längsnut der jeweiligen Profilschiene 1, 2 eingreift bzw. dort an einer entsprechenden Längskante angreift. Es ist ferner ein Hebel 38 derart vorgesehen, daß die zweite Haltekralle 36 in der genannten Längsnut oder der genannten Längskante formschlüssig und/oder kraftschlüssig verspannbar ist. Im Rahmen der Erfindung greift auch die zweite Haltekralle 36 an einer Längskante der jeweiligen Profilschiene an und umgreift diese Längskante zumindest teilweise derart, daß bei Betätigung des genannten Hebels 38 diese zweite Haltekralle 36 an der Längskante formschlüssig und/oder kraftschlüssig festspannbar ist. In der dargestellten Position des Hebels 38 ist diese Verspannung noch nicht herstellt, und die Verbindungsvorrichtung kann in dieser Stellung des Hebels 38 in die Profilschienen 1, 2 eingesetzt bzw. eingehängt werden. Die erste Haltekralle 34 ist in zweckmäßiger Weise Bestandteil der Seitenwand oder des Schenkels 8 des Verbindungsprofils 6, 7 und einteilig mit diesem durch Ausstanzen und Umbiegen zur Außenseite 40 gefertigt.

In bevorzugter Weise enthalten die Schenkel 8, 9 zwischen den an den Enden vorgesehenen Haltevorrichtungen 32 nach außen gebogene Haltekrallen 42. Diese recht langen Haltekrallen 42 ermöglichen problemlos das Einsetzen und insbesondere das Einhängen der Verbindungsvorrichtung in die zugeordneten Längsnuten der genannten Profilschienen 1, 2. Die zweite Haltekralle 36, mit welcher der Hebel 38 zusammenwirkt, ist erfindungsgemäß Bestandteil einer größtenteils auf der Innenseite des Verbindungsprofils 6, 7 angeordneten Klammer 44. Mit der Klammer 44 ist der Hebel 38 derart bewegbar gekoppelt, daß durch Betätigen des Hebels 38 die zweite, mit der Klammer 44 verbundene Haltekralle 36 mit der erwähnten hinterschnittenen Längsnut der zugeordneten Profilschiene 1, 2 in Eingriff bringbar ist bzw. an der Längskante angreift und kraft- und/oder formschlüssig verspannbar ist. Die Hebel 38 sind in der noch nicht festgespannten Position dargestellt.

Die beiden Haltevorrichtungen 32 sind jeweils an den Enden der Verbindungsprofile 6, 7 angeordnet. Die Querträger 10, 11 enden in einem Abstand 47 vor dem jeweiligen freien Ende des Verbindungsprofils 6, 7 bzw. dessen Seitenwand 8, 9. Die Querträger 10, 11 sind somit entsprechend den beiden Abständen 47 kürzer als die Schenkel 8, 9, welche im wesentlichen parallel zu der einen Seitenwand der jeweiligen Profilschiene 1, 2 angeordnet sind und insbesondere an jener anliegen. Des weiteren besitzen die scherenartig angeordneten und zweckmäßig gelenkig und nach Abschluß der Montage fest miteinander verbundenen Verbindungsschienen 12, 13 eine wesentlich kleinere Länge als die Gesamtlänge der Verbindungsprofile 6, 7 bzw. deren Schenkel 8, 9. Nach der Fertigung können die beiden Verbindungsprofile 6, 7 mit ihren Querträgern 10, 11 praktisch zur Anlage gebracht werden, so daß nur ein geringes Volumen für die Lagerung und den Transport der erfindungsgemäßen Verbindungsvorrichtung erforderlich ist. Die Schlitze oder Langlöcher 22, 23 sind in den Querträgern 10, 11 derart angeordnet, daß sie sich in dieser zusammengeklappten Position die arretierbaren Gelenke 16, 17 im gemäß Zeichnung rechten Endbereich 49 des Querträgers 10, 11 befinden.

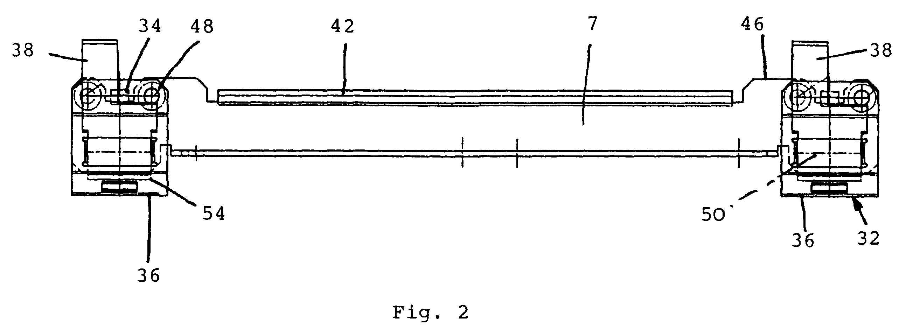

Fig. 2 zeigt eine Ansicht des zweiten seitlichen Verbindungsprofils 7, wobei nunmehr die beiden Hebel 38 wiederum in der noch nicht festgespannten Position dargestellt sind. In dieser Position ragen die Hebel 38 über die Längskante 46 des Verbindungsprofils 7 hinaus. Hierdurch ist dem Monteur signalisiert, daß die feste Verbindung mit der zugeordneten Profilschiene noch nicht hergestellt ist. Die Klammer 44 ist mit Verbindungsmitteln 48, die bevorzugt als Blindnieten ausgebildet sind, insbesondere im Bereich der Längskante 46, mit dem Verbindungsprofil 7 fest verbunden. Die am anderen, gemäß Zeichnung unteren Ende der Klammer 44 angeordnete zweite Haltekralle 36 kann beim Betätigen des schwenkbar gelagerten Hebels 38 quer zur Zeichenebene bewegt werden. Der Hebel 38 ist mit der Klammer 44 schwenkbar gekoppelt, wie es mittels strichpunktierter Linie 50 angedeutet ist.

Zur Montage der erfindungsgemäßen Vorrichtung werden in bevorzugter Weise zunächst die erste Haltekralle 34 und/oder die weitere Haltekralle 42 in die Längsnut der zugeordneten Profilschiene eingesetzt bzw. mit der Längskante der Profilschiene in Eingriff gebracht. Hierbei sind die an den Enden des Verbindungsprofils 6, 7 angeordneten Haltekrallen in der "gelösten" Position gemäß Zeichnung nach oben geschwenkt, so daß sie über die Längskante 46 hinausstehen. Die zweiten Haltekrallen greifen zunächst lose in die zweite hinterschnittene Längsnut der Profilschiene ein bzw. umgreifen noch lose die entsprechende Längskante. Danach wird die Haltevorrichtung 32 durch Schwenken des Hebels 38 derart betätigt, daß auch die zweite Haltekralle 36 kraft- und/oder form schlüssig in die zugeordnete Längsnut der Profilschiene eingreift bzw. bezüglich deren Längskante festgespannt ist.

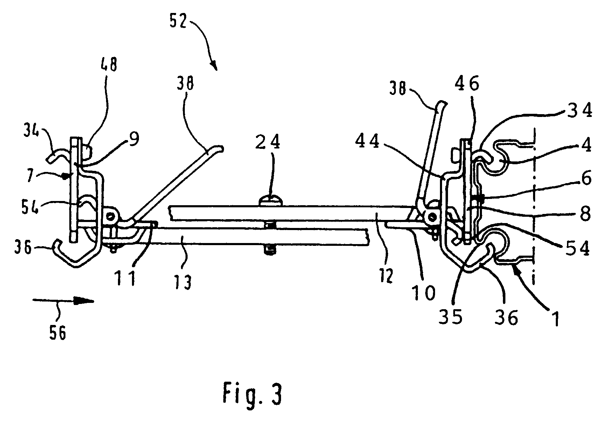

Fig. 3 zeigt eine Ansicht der erfindungsgemäßen Vorrichtung in Längsrichtung, wobei nunmehr die beiden diametral angeordneten Verbindungsprofile 6, 7 sowie die beiden Verbindungsschienen 12, 13 zu erkennen sind. Wie bereits erläutert, besitzen die Verbindungsschienen 12, 13 einen im wesentlichen U-förmigen Querschnitt. Die Haltevorrichtung des Verbindungsprofils 6 ist wiederum in der unverspannten Position dargestellt, in welcher der Hebel 38 über die Längskante 46 vorsteht. Hingegen ist die Haltevorrichtung 32 des Verbindungsprofils 7 in der festgespannten Position dargestellt, wobei auch die Profilschiene 1 teilweise dargestellt ist. Wie ersichtlich, enthält die Profilschiene 1 jeweils im Endbereich die beiden Längsnuten 4, wobei entsprechend in dem hier nicht dargestellten Teil der Profilschiene 1 zwei weitere Längsnuten in den Eckbereichen vorhanden sind. Die Längsnuten 4 schließen an die Längskanten 35 an. Die beiden Haltekrallen 35, 36 greifen in die zugeordneten, gemäß Zeichnung übereinander befindlichen Längsnuten 4 ein, wobei mittels der oberen ersten Haltekralle 34 somit die erfindungsgemäße Vorrichtung lose in die Profilschiene 1 eingehängt ist. Die fest mit dem Schenkel 8 verbundene obere Haltekralle 34 und die mittels der Klammer 44 bewegbare untere Haltekralle 36 sind derart ausgebildet und/oder auf die Profilschiene 1 abgestimmt, daß in der gelösten Position der Haltevorrichtung beide Haltekrallen 34, 36, entsprechendes gilt auch für die oben erwähnte weitere Haltekralle, problemlos in die beiden zugeordneten Längsnuten einsetzbar sind bzw. über die Längskanten 35 hinwegbewegt werden können. Danach erfolgt durch Schwenken des Hebels 38 nach unten das endgültige Festspannen derart, daß die zweite Haltekralle 36 kraft- und/oder formschlüssig in die korrespondierende Längsnut 4 eingreift und/oder die Längskante 35 umgreift, wobei im Zusammenwirken mit der ersten Haltekralle 34 und/oder der erwähnten weiteren Haltekralle des Verbindungsprofils 6 eine dauerhafte stabile Verbindung der erfindungsgemäßen Vorrichtung mit den beiden Profilschienen hergestellt ist. Solange die oben erläuterten Arretierungsmittel der Verbindungsschienen 12, 13 noch gelöst sind, können die beiden Profilschienen in der gewünschten Weise exakt zueinander ausgerichtet werden, wobei mittels der erfindungsgemäßen Verbindungsvorrichtung aber bereits schon eine hinreichend stabile Verbindung vorgegeben ist. Nach der endgültigen Ausrichtung und Justierung der beiden Profilschienen wird mittels der Arretierungsmittel eine feste und dauerhafte Verbindung der Profilschienen endgültig hergestellt.

Der schwenkbare Hebel 38 ist in Richtung des Pfeiles 52 nach innen geschwenkt, wobei das freie Ende unterhalb der Verbindungsebene der Längskanten 46 der beiden Verbindungsprofile 6, 7 liegt. Damit ist dem Monteur optisch das eindeutige Signal gegeben, daß die Haltevorrichtung 32 des Verbindungsprofils 7 festgespannt ist. Aufgrund des nach außen vorstehenden Hebelendes der Haltevorrichtung 32 des Verbindungsprofils 6 erkennt der Monteur sofort, daß hier die Befestigung noch nicht ordnungsgemäß durchgeführt ist. Dies ist insbesondere bei einem Montagesystem mit einer Anzahl der erfindungsgemäßen Verbindungsvorrichtungen von besonderer Bedeutung, um Montagefehler zu vermeiden. Da regelmäßig Vorwandsysteme nach der Montage mit geeigneten Platten oder einer Beplankung versehen werden, läßt sich eine nachträgliche Kontrolle der ordnungsgemäßen Montage in der Praxis mit einem vertretbaren Aufwand nicht mehr durchführen. Durch die erfindungsgemäße Anordnung und Ausbildung der Haltevorrichtung wird aber gewährleistet, daß bei Anordnung der Verkleidung oder Beplankung ein nach außen irrtümlich noch vorstehender Hebel sofort erkannt wird, zumal in der nicht verspannten Position des Hebels 38 eine derartige Verkleidung gar nicht angebracht werden könnte. Die Montagesicherheit wird durch die erfindungsgemäße Ausbildung somit erheblich verbessert.

Wie bereits erläutert, ist der Hebel 38 schwenkbar an der Klammer 44 befestigt. Der Hebel 38 weist in dem Freiraum zwischen der Klammer 44 und der Innenfläche des jeweiligen Verbindungsprofils 6, 7 einen Arm 54 derart auf, daß die Klammer 44 und die daran angeordnete zweite Haltekralle 36 in Richtung des Pfeiles 56 verschwenkbar ist, um die zweite Haltekralle 36 kraftschlüssig und/oder formschlüssig in die erwähnte Längsnut der Profilschiene festzuklemmen. Es sei darauf hingewiesen, daß die erste Haltekralle 34 in die andere Längsnut der Profilschiene eingreift. Nach dem Schwenken des Hebels 38 in Richtung des Pfeiles 52 wird infolgedessen über die beiden Haltekrallen 34, 36 eine feste Verspannung der Verbindungsvorrichtung und der jeweiligen Profilschiene sichergestellt.

### Bezugszeichen

- 1, 2: Profilschiene
- 4: hinterschnittene Längsnut
- 6, 7: Verbindungsprofil
- 8, 9: Schenkel
- 10, 11: Querträger
- 12, 13: Verbindungsschiene
- 14, 15: Gelenk
- 16, 17: arretierbares Gelenk
- 18 - 21: Arretierungsmittel
- 22, 23: Schlitz / Langloch in 10, 11
- 24: Kopplungsmittel
- 25: Langloch
- 26: Doppelpfeil
- 28: Abstand
- 30: strichpunktierte Linie
- 32: Haltevorrichtung
- 34: erste Haltekralle
- 35: Längskante
- 36: zweite Haltekralle
- 38: Hebel
- 40: Außenseite
- 42: weitere Haltekralle
- 44: Klammer
- 46: Längskante
- 47: Abstand
- 48: Verbindungsmittel / Blindniet
- 49: Endbereich von 10, 11 bzw. 22, 23
- 50: strichpunktierte Linie
- 52: Pfeil
- 54: Arm von 38
- 56: Pfeil

## Patentansprüche

1. Vorrichtung zum Verbinden von zwei Profilschienen (1, 2), welche insbesondere in ihren Eckbereichen jeweils wenigstens eine hinterschnittene Längsnut (4) und/oder eine Längskante (35) aufweisen, enthaltend eine Verbindungsschiene (12, 13) und zwei Verbindungsprofile (6, 7), welche einerseits mit der Verbindungsschiene (12, 13) und andererseits mit jeweils einer der genannten Profilschienen (1, 2) verbindbar sind, dadurch gekennzeichnet, daß die Verbindungsprofile (6, 7) Haltekrallen (34, 42, 36) aufweisen, welche in die wenigstens eine Längsnut (4) der zugeordneten Profilschiene (1, 2) eingreifen und/oder an deren Längskante (35) angreifen, daß die Haltekrallen (34, 42, 36) in der genannten Längsnut (4) und/oder an der genannten Längskante (35) festspannbar und/oder festklemmbar sind und daß die beiden Verbindungsprofile (6, 7) mittels Gelenken (14, 16) wenigstens einer Verbindungsschiene (12, 13) miteinander verbunden und mittels Arretierungsmitteln (18-21) in einer vorgebbaren Position zueinander fixierbar sind.

2. Vorrichtung nach Anspruch 1, dadurch gekennzeichnet, daß die beiden Verbindungsprofile (6, 7) im wesentlichen parallel zur zugeordneten Profilschiene (1, 2) angeordnet sind und/oder als Winkelprofile ausgebildet sind und/oder gegeneinander gerichtete Querträger (10, 11) aufweisen.

3. Vorrichtung, insbesondere nach Anspruch 1 oder 2, dadurch gekennzeichnet, daß wenigstens ein Gelenk (16, 17) der Verbindungsschiene (12, 13) in Richtung der Längserstreckung des Verbindungsprofils (6, 7) verschiebbar, insbesondere in einem Schlitz (22, 23), angeordnet ist und/oder daß das verschiebbare Gelenk (16, 17) mittels der Arretierungsmittel (18-21) bezüglich des Verbindungsprofils (6, 7) derart arretierbar ist, daß die Verbindungsschiene (12, 13) zum Verbindungsprofil (6, 7) eine definierte Winkellage einnimmt.

4. Vorrichtung nach einem der Ansprüche 1 bis 3, dadurch gekennzeichnet, daß zwei Verbindungsschienen (12, 13) vorgesehen sind, welche mit ihrem jeweiligen Ende sowohl an dem ersten Verbindungsprofil (6) als auch an dem zweiten Verbindungsprofil (7) angelenkt sind und/oder daß die Verbindungsschienen (12, 13) kreuzförmig nach Art einer Schere angeordnet sind, wobei über Kopplungsmittel (24) eine definierte bevorzugt parallele Ausrichtung vorgebbar ist und/oder nach Lösen der Kopplungsmittel (24) oder Verschieben in einem Langloch (25) der einen Verbindungsschiene (12) die Ausrichtung der Profilschienen (1, 2) frei vorgebbar ist.

5. Vorrichtung nach einem der Ansprüche 1 bis 4, dadurch gekennzeichnet, daß die Verbindungsschienen (12, 13) mit ihren ersten Enden mittels eines im ersten Verbindungsprofil (6) bzw. im zweiten Verbindungsprofil (7) fest angeordneten Gelenks (14, 15) verbunden sind, während die jeweils anderen Enden der Verbindungsschienen (12, 13) mit dem zweiten Verbindungsprofil (7) bzw. dem ersten Verbindungsprofil (6) mittels des verschiebbaren und arretierbaren Gelenks (17, 16) gekoppelt sind.

6. Vorrichtung, insbesondere nach einem der Ansprüche 1 bis 5, dadurch gekennzeichnet, daß die Verbindungsprofile (6, 7) jeweils wenigstens eine Haltevorrichtung (32) aufweisen, welche mit der hinterschnittenen Längsnut (4) der zugeordneten Profilschiene (1, 2) in Eingriff bringbar und mit dieser verspannbar und/oder festklemmbar ist.

7. Vorrichtung nach einem der Ansprüche 1 bis 6, dadurch gekennzeichnet, daß an jedem Verbindungsprofil (6, 7), insbesondere in den axialen Endbereichen jeweils eine Haltevorrichtung (32) vorgesehen ist und/oder daß axial zwischen den jeweiligen Haltevorrichtungen (32) der nach innen gerichtete Querträger (10, 11) des Verbindungsprofils (6, 7) vorgesehen ist und/oder daß die Länge des Verbindungsprofils (6, 7) größer ist als die Länge der Verbindungsschiene (12, 13).

8. Vorrichtung nach einem der Ansprüche 1 bis 7, dadurch gekennzeichnet, daß die Haltevorrichtung (32) eine erste Haltekralle (34) aufweist, welche insbesondere Bestandteil der Verbindungsschiene (12, 13) ist, und ferner eine zweite Haltekralle (36) aufweist, welche mittels eines Hebels (38) oder dergleichen in die hinterschnittene Längsnut (4) der zugeordneten Profilschiene (1, 2) bringbar und dort festspannbar und/oder festklemmbar ist.

9. Vorrichtung nach Anspruch 8, dadurch gekennzeichnet, daß die zweite Haltekralle (36) an der Innenseite des Verbindungsprofils (6, 7) angeordnet ist und/oder an einem Ende einer Klammer (44) angeordnet ist, welche mit ihrem anderen Ende fest mit dem Verbindungsprofil (6, 7), insbesondere dessen zur Profilschiene (1, 2) im wesentlichen parallelen Schenkels (8) angeordnet ist.

10. Vorrichtung nach einem der Ansprüche 1 bis 9, dadurch gekennzeichnet, daß der Hebel (38) derart angeordnet ist, daß er im gelösten Zustand teilweise über eine Längskante (46) des Verbindungsprofils (6, 7) hinausragt und im arretierten Zustand der Haltevorrichtung zumindest auf das Niveau der Längskante (46), vorzugsweise nach innen, verschwenkt ist und/oder daß der Hebel (38) an der Klammer (44) der Haltevorrichtung (32) angelenkt ist und einen an der Innenseite des Verbindungsprofils (6, 7) abstützbaren Arm (54) aufweist und/oder daß im gelösten Zustand die zweite Haltekralle (36) zur Außenseite (40) des Verbindungsprofils (6, 7) einen größeren Abstand aufweist, als im festgespannten Zustand.
